# NEUE EUROPÄISCHE PATENTSCHRIFT

(11) **EP 3 055 156 B2**
(45) Veröffentlichungstag und Bekanntmachung des Hinweises auf die Entscheidung über den Einspruch: **17.05.2023**
(45) Hinweis auf die Patenterteilung: 21.02.2018
(21) Anmeldenummer: 14781192.1
(22) Anmeldetag: 07.10.2014
(51) Int. Cl.: B60K 15/035, B60K 15/04, B60K 13/04

(54) **EINFÜLLSTUTZEN FÜR EINEN KRAFTFAHRZEUG-BETRIEBSFLÜSSIGKEITSBEHÄLTER**
FILLER NECK FOR A MOTOR VEHICLE OPERATING-LIQUID TANK
TUBULURE DE REMPLISSAGE POUR UN CONTENANT DE FLUIDE DE FONCTIONNEMENT D'UN VÉHICULE À MOTEUR

(30) Priorität: 09.10.2013 DE 102013016684
(43) Veröffentlichungstag der Anmeldung: 17.08.2016
(73) Patentinhaber: Kautex Textron GmbH & Co. KG, 53229 Bonn (DE)
(72) Erfinder: KOUKAN, Ibrahim, 50999 Köln (DE); MAGLOVSKI, Jaroslav, 53797 Lohmar (DE)
(74) Vertreter: Richly & Ritschel Patentanwälte PartG mbB
(86) Internationale Anmeldenummer: PCT/EP2014/071409
(87) Internationale Veröffentlichungsnummer: WO 2015/052166

(56) Entgegenhaltungen:
- WO-A1-2013/034575
- WO-A2-2012/020313
- WO-A2-2012/100906
- DE-A1-102011 009 754
- DE-T2- 69 305 024
- DE-U1- 8 630 617
- DE-U1-202005 011 575
- DE-U1-202007 018 245
- FR-A1- 2 936 837
- US-A- 3 133 564
- US-A- 3 187 936
- US-A1- 2007 108 211
- US-A1- 2009 321 441

## Beschreibung

Die Erfindung betrifft einen Einfüllstutzen für einen Kraftfahrzeug-Betriebsflüssigkeitsbehälter, wobei der Einfüllstutzen einen Mundlochstutzen umfasst, in den ein Zapfventil zum Befüllen des Betriebsflüssigkeitsbehälters einführbar ist, und wobei in dem Einfüllstutzen ein Entlüftungspfad vorgesehen ist, der bei der Betankung eine Entlüftungsströmung parallel und entgegengesetzt zum Betankungsvolumenstrom durch den Mundlochstutzen zulässt.

Bei dem Betriebsflüssigkeitsbehälter kann es sich um einen Kraftstoffbehälter, ein Harnstoffbehälter zum Einsatz im SCR-Verfahren (Selektive katalytische Reduktion) oder um einen anderen Kraftfahrzeug-Betriebsflüssigkeitsbehälter handeln.

Beim Befüllen von Kraftfahrzeug-Betriebsflüssigkeitsbehältern, beispielsweise mittels eines Zapfventils, kann über den Einfüllstutzen Betriebsflüssigkeit austreten. Bei einer Ventilabschaltung mittels Schnüffelbohrung/Abschaltbohrung am Zapfventil führen die hierbei erzeugten Druckstöße zu einer aufwallenden und zurückschwallenden Flüssigkeitsmenge, die je nach Gestaltung des Einfüllstutzens teilweise auch aus dem Einfüllstutzen nach außen hervorspritzen kann. Insbesondere bei der Betankung mit Harnstoff führt dies zu nicht wünschenswerten äußeren Verunreinigungen am Einfüllstutzen und am Fahrzeug.

So spritzen beim so gennannten "spitback" aufgrund des Abschaltens des Zapfventils und der damit einhergehenden Wellenbildung im Einfüllstutzen Betriebsflüssigkeitstropfen durch Entlüftungsöffnungen aus dem Einfüllstutzen. Beim so genannten "splashback" treten aufgrund des Abschaltens des Zapfventils und/oder aufgrund des Auftreffens der aus dem Zapfventil austretenden Betriebsflüssigkeit auf eine Flüssigkeitssäule während der Betankung größere Flüssigkeitsmengen aus Belüftungsöffnungen des Einfüllstutzens aus.

Zum einen soll die Entlüftungskapazität, d.h. die pro Zeiteinheit durch Entlüftungseinrichtungen abführbare Gasmenge, von Einfüllstutzen erhöht werden, damit die Zeit zum Befüllen des Betriebsflüssigkeitsbehälters verringert werden kann, und zum anderen soll gleichzeitig der spitback und der splashback reduziert werden. Jedoch sind diese beiden Zielvorgaben bisher nicht miteinander vereinbar, denn umso größer die Entlüftungskapazität eines Einfüllstutzens ist, desto größer müssen die Querschnittsflächen der Entlüftungskanäle sein, was zu einem höheren spitback und splashback des Einfüllstutzens führt.

Aus der DE 10 2011 009 745 A1 ist ein Einfüllstutzen bekannt, bei dem der Entlüftungspfad an die Atmosphäre mehrere in Axialrichtung verlaufende Nuten in der Innenwandung des Mundlochstutzens umfasst. Diese Nuten bilden zusammen mit einem in den Mundlochstutzen eingeführten Zapfventil einen Gasaustrittskanal an die Atmosphäre.

Der aus der DE 10 2011 009 745 A1 bekannte Einfüllstutzen weist bereits gute Entlüftungseigenschaften beim Befüllen des Betriebsflüssigkeitsbehälters auf. Jedoch muss das Zapfventil einen bestimmten Durchmesser aufweisen, damit die Gasaustrittskanäle durch das Nutprofil des Mundlochstutzens und durch die Außenwandung des Zapfventils gebildet und begrenzt sind. Ferner ist die Querschnittsfläche der Gasaustrittskanäle beschränkt, damit der spitback und der splashback nicht übermäßig groß werden. Auch kann sich bei einem zu kleinen Durchmesser des Zapfventils ein Betriebsflüssigkeitsfilm aufgrund des Kapillareffektes zwischen den Profilbergen der Nuten und dem Zapfventil bilden, so dass beim Entlüften die Betriebsflüssigkeit durch den Entlüftungsstrom mitgerissen werden kann.

Die DE 693 05 024 T2 offenbart einen gattungsbildenden Einfüllstutzen für einen Benzintank. Der Einfüllstutzen umfasst einen kegelstumpfförmigen Körper, wobei in einer ersten Ausführungsform eine Trennwand innerhalb des kegelstumpfförmigen Körpers vorgesehen ist, sodass Entlüftungskanäle gebildet sind, die durch Radialtrennwände voneinander getrennt sind. In einer weiteren Ausführungsform des Einfüllstutzens sind innerhalb des kegelstumpfförmigen Körpers radial vorstehende Wandungen vorgesehen, die Entlüftungskanäle voneinander trennen, die sich durch Einführen eines Zapfventils in den Einfüllstutzen bilden, und zwar durch die Radialvorsprünge mit der Außenwandung des Zapfventils.

Die DE 20 2005 011 575 U1 offenbart einen gattungsbildenden Einfüllstutzen für einen Behälter. Der Einfüllstutzen umfasst einen Mundlochstutzen, in den ein Zapfventil zum Befüllen des Behälters einführbar ist. In dem Einfüllstutzen ist ein Entlüftungspfad vorgesehen, der bei der Betankung eine Entlüftungsströmung parallel und entgegengesetzt zum Betankungsvolumenstrom durch den Mundlochstutzen zulässt. Dabei umfasst der Entlüftungspfad mehrere in einer Wandung des Mundlochstutzens vorgesehene Entlüftungskanäle, die entlang dessen Längserstreckung von einer Außenwand und einer Innenwand der Wandung umschlossen sind.

Der vorliegenden Erfindung liegt die Aufgabe zugrunde, einen verbesserten Einfüllstutzen bereitzustellen, der eine erhöhte Entlüftungskapazität bei gleichzeitig vermindertem Austritt von Betriebsflüssigkeit durch den Einfüllstutzen während des Befüllvorgangs gewährleistet.

Die der vorliegenden Erfindung zugrunde liegende Aufgabe wird durch einen Einfüllstutzen mit den Merkmalen des Anspruchs 1 gelöst. Vorteilhafte Ausführungen sind in den Unteransprüchen beschrieben.

Im Genaueren zeichnet sich der erfindungsgemäße Einfüllstutzen dadurch aus, dass die Innenwand der den Entlüftungskanal/die Entlüftungskanäle umschließenden Wandung im Bereich der Mundlochöffnung zumindest eine derartige Materialausnehmung aufweist, dass der Entlüftungskanal/die Entlüftungskanäle im Bereich der Mundlochöffnung zum Innenraum des Mundlochstutzens hin geöffnet ist/ sind.

Ein entsprechend ausgebildeter Einfüllstutzen weist verbesserte Entlüftungseigenschaften und einen erhöhten Entlüftungsvolumenstrom auf. Darüber hinaus weist ein entsprechend ausgebildeter Einfüllstutzen eine niedrige Neigung zum "spitback" bzw."splashback" auf. Der Einfüllstutzen umfasst selbstverständlich einen mit dem Mundlochstutzen und mit dem Betriebsflüssigkeitsbehälter fluidverbundenen Einfüllkanal. Der Mundlochstutzen kann auch als Zylinderstutzen bezeichnet werden, und der Entlüftungskanal kann auch als Längskanal, als axial verlaufender Ringspalt oder auch als bogenförmiger Kanal bezeichnet werden. Der Entlüftungskanal ist in Einbauposition des Einfüllstutzens mit dem Betriebsflüssigkeitsbehälterinnenraum und beispielsweise mit der Atmosphäre fluidverbunden.

Aufgrund der Trennung des Entlüftungskanals von dem Befüllkanal des Einfüllstutzens weist der erfindungsgemäße Einfüllstutzen einen vom Zapfventil unabhängigen Entlüftungsquerschnitt auf. Dadurch ist es möglich, den Entlüftungsquerschnitt im Vergleich zu aus dem Stand der Technik bekannten Einfüllstutzen zu vergrößern, ohne dass der Einfüllstutzen einen vergrößerten "spitback" bzw. "splashback" aufweist.

Folglich vereint der erfindungsgemäße Einfüllstutzen die bisher miteinander nicht zu vereinbarenden Merkmale eines vergrößerten Entlüftungsquerschnitts der Entlüftungskanäle bzw. des Entlüftungskanals und einer Reduzierung des "spitbacks" bzw. des "splashbacks" beim Betanken des Betriebsflüssigkeitsbehälters. Ferner wird ein sogenannter "Blowout", bei dem während der Betankung aus dem Einfüllkopf bzw. aus dem Einfüllstutzen Flüssigkeitstropfen herausspritzen, vermieden, denn der Entlüftungskanal bzw. die Entlüftungskanäle stehen nicht in direktem Fluidkontakt mit dem Einfüllkanal des Mundlochstutzens.

Ein weiterer Vorteil des erfindungsgemäßen Einfüllstutzens ist die Möglichkeit, den Standardisierungsgrad von Einfüllstutzen zu erhöhen, da Zapfventile mit unterschiedlichen Durchmessern mit dem erfindungsgemäßen Einfüllstutzen verwendet werden können, sodass für unterschiedliche Zapfventile ein und derselbe Einfüllstutzen verwendet werden kann.

Der Entlüftungspfad des Einfüllstutzens umfasst zumindest zwei Entlüftungskanäle, die durch eine mit der Innenwand und der Außenwand verbundenen Radialwand voneinander getrennt sind. Ein entsprechend ausgebildeter Einfüllstutzen ist in seiner Herstellung besonders einfach und weist darüber eine hohe mechanische Stabilität auf. Darüber hinaus dient die Radialwand im Falle von "spitback", "splashback" oder "Blowout" auch als eine Wand, an der die entsprechenden Betriebsflüssigkeitstropfen abgeschieden und zurück in Richtung des Einfüllstutzens geleitet werden. Natürlich kann der Entlüftungspfad auch mehr als zwei Entlüftungskanäle umfassen, die jeweils durch eine mit der Innenwand und der Außenwand verbundenen Radialwand voneinander getrennt sind.

Vorzugsweise ist der Entlüftungskanal bzw. sind die Entlüftungskanäle konisch ausgebildet, wobei sich der Entlüftungskanal bzw. die Entlüftungskanäle von dem dem Betriebsflüssigkeitsbehälter zugewandtem Ende hin zu dessen Mundlochöffnung verjüngt bzw. verjüngen.

Mit der Verjüngung des Entlüftungskanals bzw. der Entlüftungskanäle kann eine kleiner werdende Querschnittsfläche des Entlüftungskanals/der Entlüftungskanäle einhergehen. Es ist jedoch auch möglich, dass trotz Verjüngung des Entlüftungskanals/der Entlüftungskanäle entlang einer Ausdehnungsrichtung die Querschnittsfläche des Entlüftungskanals/der Entlüftungskanäle entlang dessen Längserstreckung im Wesentlichen konstant bleibt. Dies kann beispielsweise dadurch realisiert werden, dass bei einem entlang der Längserstreckung kleiner werdenden Abstand von sich radial gegenüberstehender Außenwand und Innenwand sich die Breitenerstreckung des Entlüftungskanals/der Entlüftungskanäle im selben Maße vergrößert.

Durch die Verjüngung des Entlüftungskanals/der Entlüftungskanäle wird der Austritt von Betriebsflüssigkeitströpfchen durch den Entlüftungskanal/die Entlüftungskanäle weiter reduziert, da die Flüssigkeit aufgrund der schräg verlaufenden Begrenzungswände des Entlüftungskanals/der Entlüftungskanäle effektiver abgeschieden und anschließend wieder in Richtung des Einfüllstutzens zurück geleitet werden kann.

Vorzugsweise weist die Innenwand der dem Entlüftungskanal/der Entlüftungskanäle umschließenden Wandung im Bereich des dem Mundlochöffnung abgewandtem Endes zumindest eine derartige Materialausnehmung auf, dass der Entlüftungskanals/die Entlüftungskanäle in dem der Mundlochöffnung abgewandten Bereich zum Innenraum des Mundlochstutzens hin geöffnet ist/sind.

Durch eine entsprechende Ausgestaltung des Einfüllstutzens ist die Querschnittsfläche des Entlüftungskanals bzw. der Entlüftungskanäle im unteren Bereich des Einfüllstutzens vergrößert, sodass eine besonders effektive Entlüftung mittels des Einfüllstutzens ermöglicht ist. Zusätzlich kann auch die Außenwand im oberen Bereich des Mundlochstutzens eine Materialausnehmung aufweisen. Ein entsprechend ausgebildeter Einfüllstutzen weist verbesserte Entlüftungseigenschaften und einen erhöhten Entlüftungsvolumenstrom auf. Darüber hinaus weist ein entsprechend ausgebildeter Einfüllstutzen eine niedrige Neigung zum "spitback" bzw. "splashback" auf.

Vorzugsweise ist in dem Einfüllstutzen ein Ringmagnet vorgesehen, der hinsichtlich der Entlüftungsströmung stromaufwärts und hinsichtlich der Betriebsflüssigkeitseinfüllrichtung stromabwärts vom Mundlochstutzen angeordnet ist.

Dabei ist der Entlüftungspfad vorzugsweise an der Außenseite des Ringmagneten entlang geführt.

Bei einer entsprechenden Ausgestaltung des Einfüllstutzens sind der Befüllkanal, über den die Betriebsflüssigkeit in den Betriebsflüssigkeitsbehälter eingefüllt wird, und der Entlüftungskanal vollständig voneinander getrennt. Ferner ist der Entlüftungspfad im Bereich des Ringmagneten nicht durch dessen Innendurchmesser begrenzt, sodass eine verbesserte Entlüftung mit einem hohen Entlüftungsvolumenstrom ermöglicht ist.

Vorzugsweise ist der Entlüftungskanal/sind die Entlüftungskanäle in Draufsicht auf den Mundlochstutzen in dessen Wandung nicht komplett umlaufend angeordnet.

Weiter vorzugsweise erstreckt/erstrecken sich in Draufsicht auf den Mundlochstutzen der Entlüftungskanal/die Entlüftungskanäle um weniger als 300° um den Umfang des Mundlochstutzens. Es ist auch möglich, dass sich der Entlüftungskanal/die Entlüftungskanäle um weniger als 270° oder um weniger als 180° um den Umfang des Mundlochstutzens erstrecken.

Durch eine entsprechende Ausgestaltung des Einfüllstutzens ist es möglich, dass in Einbaulage des Einfüllstutzens der Entlüftungskanal bzw. die Entlüftungskanäle im oberen Bereich des Mundlochstutzens angeordnet sind, sodass die unteren Enden des Entlüftungskanals/der Entlüftungskanäle nicht durch die Betriebsflüssigkeit bedeckt sind, wenn beispielsweise ein Nachtankvorgang durchgeführt wird. Dies wiederum führt dazu, dass die Entlüftungskanäle durch weniger oder gar keine Betriebsflüssigkeit benetzt sind, sodass ein entsprechend ausgebildeter Einfüllstutzen einen verminderten "spitback" bzw. "splashback" aufweist.

Vorzugsweise weist der Entlüftungskanal bzw. weisen die Entlüftungskanäle in Summe eine Querschnittsfläche zwischen 10 mm² und 100 mm² auf.

Weiter vorzugsweise weist der Entlüftungskanal bzw. weisen die Entlüftungskanäle in Summe eine Querschnittsfläche zwischen 20 mm² und 80 mm² auf. Höchst vorzugsweise weist der Entlüftungskanal bzw. weisen die Entlüftungskanäle eine Querschnittsfläche zwischen 40 mm² und 70 mm² auf.

Durch eine entsprechende Ausgestaltung des Einfüllstutzens und eine entsprechende Dimensionierung des Entlüftungskanals bzw. der Entlüftungskanäle kann ein Entlüftungsvolumenstrom von 40 l/min. gewährleistet werden, was für die Betankung des Betriebsflüssigkeitsbehälters wünschenswert ist.

Weitere Vorteile, Einzelheiten und Merkmale der Erfindung ergeben sich nachfolgend aus den erläuterten Ausführungsbeispielen. Dabei zeigen im Einzelnen:
- Figur 1: einen Querschnitt durch einen Betriebsflüssigkeitsbehälter mit einem Einfüllstutzen gemäß der Erfindung;
- Figur 2a:: eine Draufsicht auf die Oberseite des Oberteils eines Einfüllstutzens gemäß einer ersten Ausführungsform der vorliegenden Erfindung;
- Figur 2b:: ein seitliche Schnittdarstellung des in Figur 2a dargestellten Oberteils des Einfüllstutzens;
- Figur 3a:: eine Draufsicht auf die Oberseite des Oberteils eines Einfüllstutzens gemäß einer zweiten Ausführungsform der vorliegenden Erfindung;
- Figur 3b:: eine Draufsicht auf die Unterseite des in Figur 3a dargestellten Oberteils des Einfüllstutzens;
- Figur 3c:: eine Seitenansicht des in den Figuren 3a und 3b dargestellten Oberteils des Einfüllstutzens in Schnittdarstellung;
- Figur 4a:: eine Draufsicht auf die Oberseite des Oberteils eines Einfüllstutzens gemäß einer dritten Ausführungsform der vorliegenden Erfindung;
- Figur 4b:: eine Seitenansicht des in Figur 4a dargestellten Oberteils des Einfüllstutzens in Schnittdarstellung;
- Figur 4c:: eine räumliche Darstellung des in den Figuren 4a und 4b dargestellten Oberteils des Einfüllstutzens;
- Figur 5a:: eine Draufsicht auf die Oberseite des Oberteils eines Einfüllstutzens gemäß einer vierten Ausführungsform der vorliegenden Erfindung;
- Figur 5b:: eine Draufsicht auf die Unterseite des in Figur 5a dargestellten Oberteils des Einfüllstutzens;
- Figur 5c:: eine Seitenansicht des in den Figuren 5a und 5b dargestellten Oberteils des Einfüllstutzens;
- Figur 5d:: eine räumliche Darstellung des in den Figuren 5a, 5b und 5c dargestellten Oberteils des Einfüllstutzens;
- Figur 6a:: eine Querschnittsdarstellung durch einen aus dem Stand der Technik bekannten Einfüllstutzen; und
- Figur 6b:: eine Querschnittsdarstellung durch einen erfindungsgemäßen Einfüllstutzen

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

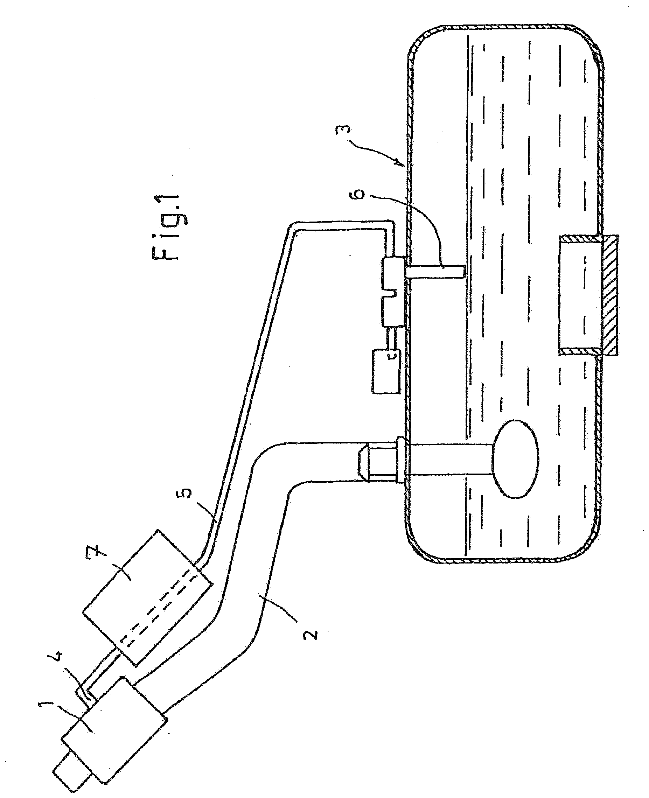

Wie der Figur 1 zu entnehmen ist, ist der Einfüllstutzen 1 gemäß der Erfindung an einem Einfüllrohr 2 eines Betriebsflüssigkeitsbehälters 3 angeordnet. Dieser Betriebsflüssigkeitsbehälter ist bei dem beschriebenen Ausführungsbeispiel als Harnstoffbehälter für eine flüssige Harnstofflösung als Reduktionsmittel für die katalytische Abgasentstickung an einem KFZ ausgebildet.

Der Betriebsflüssigkeitsbehälter 3 kann als einstückig ausgebildeter extrusionsblasgeformter Kunststoffbehälter ausgebildet sein. Das Einfüllrohr 2 sowie der Einfüllstutzen 1 können ebenfalls aus thermoplastischem Kunststoff bestehen. Ein Oberteil 10 des Einfüllstutzens 1, das mit Bezug auf die nachfolgenden Figuren beschrieben wird, als auch die übrigen beschriebenen Bauteile können auch im Spritzgießverfahren hergestellt werden. Bei dem beschriebenen Ausführungsbeispiel ist die gesamte Anordnung aus Einfüllstutzen 1, Einfüllrohr 2 und Betriebsflüssigkeitsbehälter 3 mehrteilig. Der Einfüllstutzen 1 ist, wie nachstehend noch beschrieben, als Einfüllkopf mit einem Anschluss 4 für eine Betankungsentlüftungsleitung 5 ausgebildet. Die Betankungsentlüftungsleitung 5 mündet über ein Tauchrohr 6 als Abschaltnippel in einer vorgegebenen Entlüftungsposition in den Betriebsflüssigkeitsbehälter 3.

Die Betankungsentlüftungsleitung 5 ist von dem Betriebsflüssigkeitsbehälter 3 an den Einfüllstutzen 1 über einen Ausgleichsbehälter 7 geführt, der als Sammelbehälter für etwa in der Betankungsentlüftungsleitung 5 anfallende Flüssigkeit dient. Bei der Befüllung des Betriebsflüssigkeitsbehälters 3 wird über ein in den Figuren nicht dargestelltes Zapfventil eine Harnstofflösung in den Betriebsflüssigkeitsbehälter 3 eingeleitet mit der Folge, dass in diesem der Flüssigkeitsspiegel ansteigt und das in dem Betriebsflüssigkeitsbehälter 3 anstehende Gas über die Betankungsentlüftungsleitung 5 an den Einfüllstutzen 1 verdrängt wird, bis der ansteigende Flüssigkeitsspiegel das Tauchrohr 6 verschließt. Sodann steigt der Flüssigkeitsspiegel im Einfüllrohr 2 an, bis dieser eine Abschaltbohrung 8 an einem in dem Figuren nicht dargestellten Zapfventil erreicht und verschließt, mit der Folge, dass ein Schaltvorgang des Zapfventils ausgelöst wird. Der Betankungsvorgang ist damit beendet.

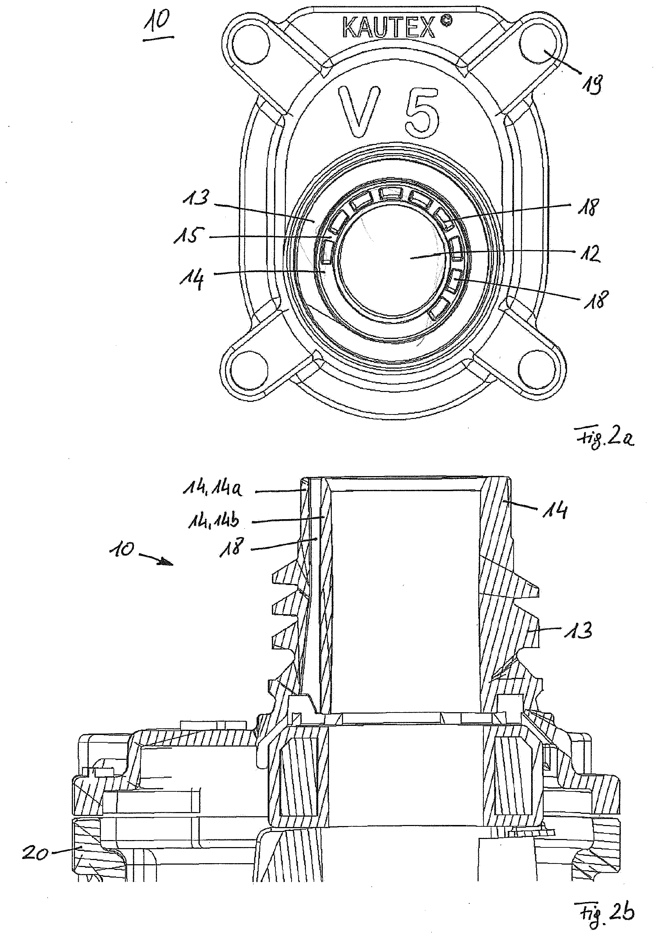

Die Figuren 2a und 2b zeigen unterschiedliche Ansichten eines Oberteils 10 des in Figur 1 dargestellten Einfüllstutzens 1. Dabei zeiget die Figur 2a eine Draufsicht auf die Oberseite des Oberteils 10 und Figur 2b eine seitliche Schnittdarstellung des in Figur 2a dargestellten Oberteils 10.

Aus den Figuren ist ersichtlich, dass das Oberteil 10 einen Mundlochstutzen 11 umfasst, an dessen oberen Ende eine Mundlochöffnung 12 bzw. ein Mundloch 12 vorgesehen ist. Durch die Mundlochöffnung 12 kann ein in den Figuren nicht dargestelltes Zapfventil in den Innenraum des Einfüllstutzens 10 eingeführt werden.

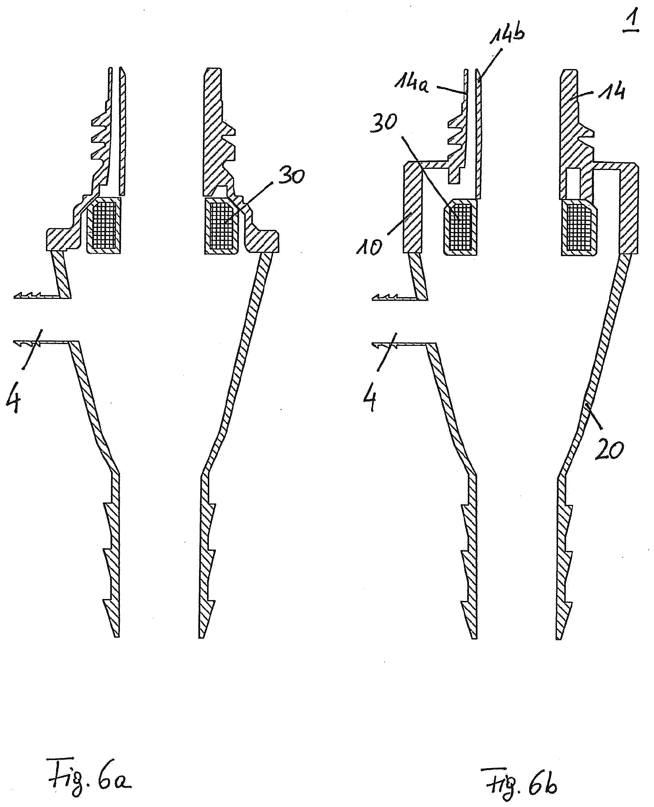

Das Oberteil 10 umfasst in der dargestellten Ausführungsform vier Befestigungsöffnungen 19, durch die beispielsweise Befestigungsschrauben hindurchgeführt und mit einem in Figur 6b dargestellten Unterteil 20 des Einfüllstutzens 1 verbunden werden können.

In dem Einfüllstutzen 1 ist ein Entlüftungspfad vorgesehen, der bei der Betankung eine Entlüftungsströmung parallel und entgegengesetzt zum Betankungsvolumenstrom durch den Mundlochstutzen 11 zulässt. Der Entlüftungspfad umfasst bei der in den Figuren 2a und 2b dargestellten Ausführungsform des Einfüllstutzens 1 neun Entlüftungskanäle 18, die entlang der Längserstreckung des Mundlochstutzens 11 von einer Außenwand 14a und einer Innenwand 14b der Wandung 14 umschlossen sind. Die jeweiligen Entlüftungskanäle 18 sind ferner durch Radialwände 15 voneinander getrennt. Die Entlüftungskanäle 18 sind folglich als Durchführungen bzw. Bohrungen 18 durch die Wandung 14 des Mundlochstutzens 11 ausgebildet.

Aus der Draufsicht der Figur 2a ist ersichtlich, dass sich die Entlüftungskanäle 18 über einen Winkel von etwa 300° um den Umfang des Mundlochstutzens 11 erstrecken. Dadurch kann gewährleistet werden, dass in Einbaulage des Einfüllstutzens 1 die unteren Enden der Entlüftungskanäle 18, beispielsweise bei einem Nachbetankungsvorgang, nicht durch innerhalb des Einfüllstutzens 1 gesammelte Betriebsflüssigkeit bedeckt sind, so dass keine Betriebsflüssigkeit durch die Entlüftung durch die Entlüftungskanäle 18 an die Außenseite des Einfüllstutzens 1 gelangt.

Aus Figur 2b ist ersichtlich, dass die jeweiligen Entlüftungskanäle 18 konisch ausgebildet sind und sich von dem dem Betriebsflüssigkeitsbehälter 3 zugewandtem Ende hin zu dessen Mundlochöffnung 12 verjüngen. Diese Verjüngung ist dadurch realisiert, dass sich der Abstand der Außenwand 14a zu der Innenwand 14b entlang der Längserstreckung des Mundlochstutzens 11 in Richtung der Mundlochöffnung 12 verringert. Durch diese Ausgestaltung des Oberteils 10 des Einfüllstutzens 1 kann "spitback" und "splashback" bei einem Betankungsvorgang und insbesondere bei einem Nachbetankungsvorgang und bei Abschalten des Zapfventils reduziert werden, da eventuell in den Entlüftungskanal 18 eingedrungene Betriebsflüssigkeit aufgrund der Verjüngung des Entlüftungskanals 18 an der Außenwand 14a oder an der Innenwand 14b besser abgeschieden werden kann. Die Betriebsflüssigkeit fließt dann anschließend der Schwerkraft folgend wieder in den unteren Bereich des Einfüllstutzens 1 und über nicht dargestellte Öffnungen wieder zurück in den Betriebsflüssigkeitsbehälter 3.

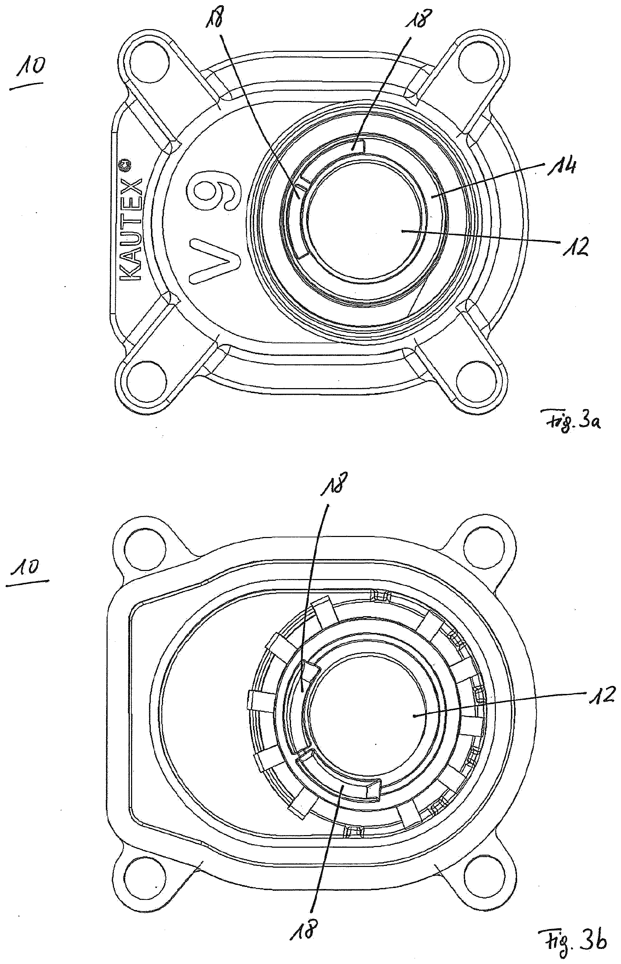

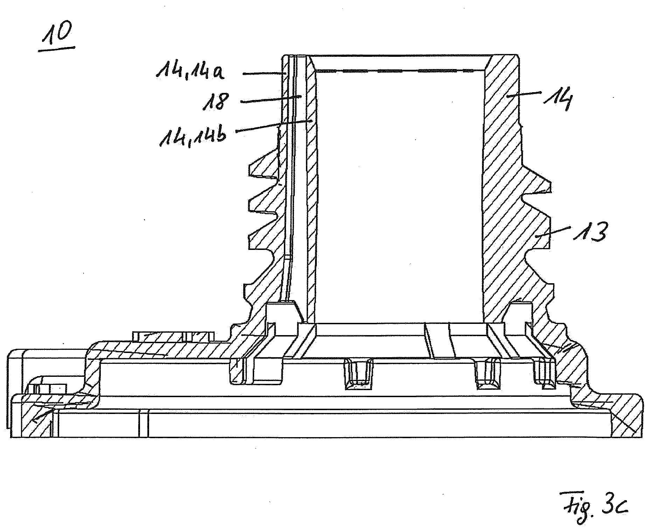

Das in den Figuren 3a bis 3c dargestellte Oberteil 10 gemäß einer zweiten Ausführungsform der vorliegenden Erfindung unterscheidet von dem Oberteil 10 gemäß der in den Figuren 2a und 2b dargestellten ersten Ausführungsform der Erfindung dadurch, dass der Entlüftungspfad lediglich zwei Entlüftungskanäle 18 umfasst, die entlang der Längserstreckung des Mundlochstutzens 11 von der Außenwand 14a und der Innenwand 14b der Wandung 14 umschlossen sind. Die zwei Entlüftungskanäle 18 sind durch eine Radialwand 15 voneinander getrennt.

Aus den Figuren 3a und 3b ist ersichtlich, dass sich in Draufsicht auf den Mundlochstutzen 11 die Entlüftungskanäle 18 um etwa 110°um den Umfang des Mundlochstutzens erstrecken. Die Querschnittsfläche der jeweiligen Entlüftungskanäle 18 in dem Oberteil 10 gemäß der zweiten Ausführungsform sind größer als die Querschnittsflächen der jeweiligen Entlüftungskanäle 18 des Oberteils 10 gemäß der ersten Ausführungsform der vorliegenden Erfindung.

Jedoch ist die gesamte Querschnittsfläche der Entlüftungskanäle 18 des Oberteils 10 gemäß der zweiten Ausführungsform nicht wesentlich kleiner als die gesamte Querschnittsfläche der Entlüftungskanäle 18 des Oberteils 10 gemäß der ersten Ausführungsform, da lediglich eine einzige Radialwand 15 zwischen den zwei Entlüftungskanälen 18 bei dem Oberteil 10 gemäß der zweiten Ausführungsform vorgesehen sein muss. Daher wird weiterhin ein hoher Entlüftungsvolumenstrom von mindestens 40 l/min erreicht.

Die zwei Entlüftungskanäle 18 weisen eine entsprechende konische Ausgestaltung auf wie die Entlüftungskanäle 18 des Oberteils 10 gemäß der ersten Ausführungsform der vorliegenden Erfindung.

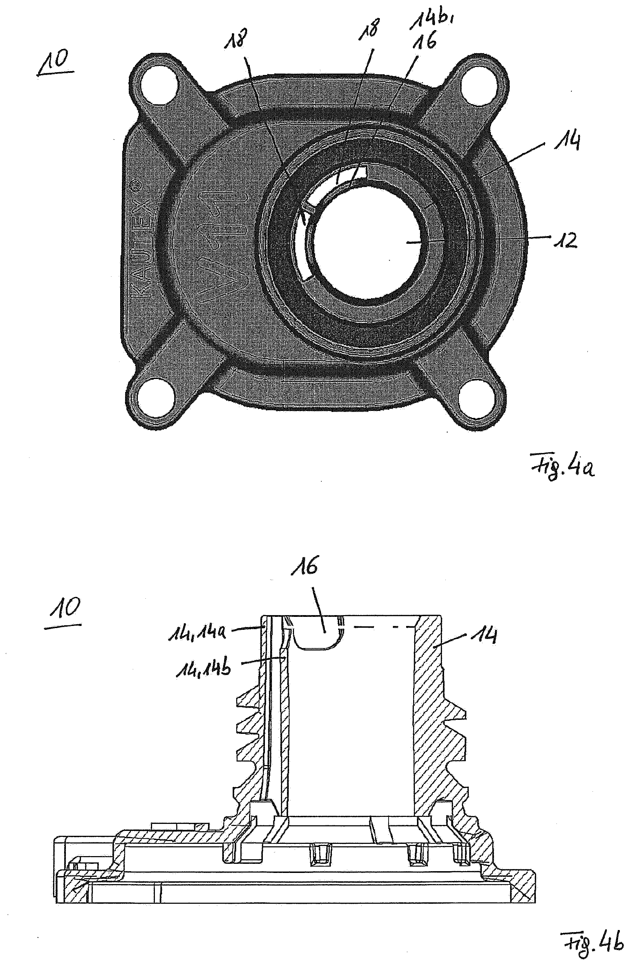

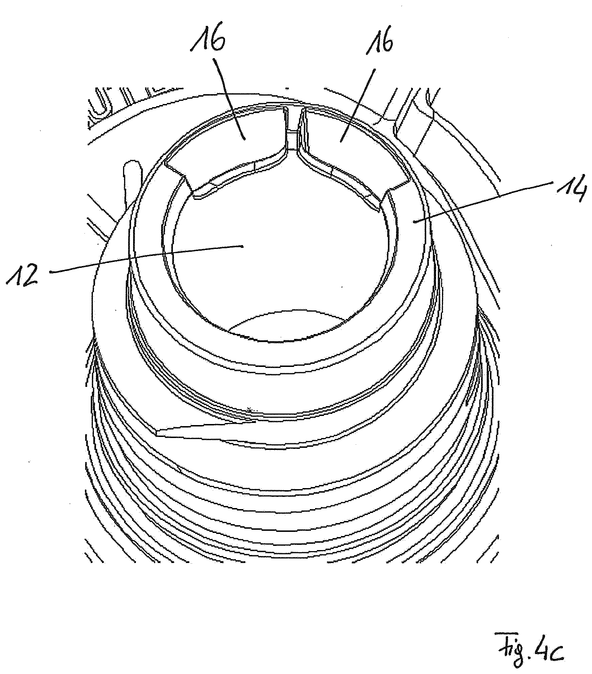

In den Figuren 4a bis 4c ist ein Oberteil 10 gemäß einer dritten Ausführungsform des erfindungsgemäßen Einfüllstutzens 1 dargestellt, wobei in Figur 4a das Oberteil 10 in Draufsicht, in Figur 4b in seitlicher Schnittansicht und in Figur 4c in räumlicher Ansicht von schräg oben dargestellt ist.

Das Oberteil 10 gemäß der dritten Ausführungsform unterscheidet von dem Oberteil 10 gemäß der zweiten Ausführungsform dadurch, dass die Innenwand 14b im Bereich der Mundlochöffnung 12 Materialausnehmungen 16 dergestalt aufweist, dass die Entlüftungskanäle 18 im Bereich der Mundlochöffnung 12 zum Innenraum des Mundlochstutzens 11 hin geöffnet sind. Die Innenwand 14b weist folglich eine der Anzahl der Entlüftungskanäle 18 entsprechende Anzahl von Materialausnehmungen 16 auf. Die übrige Ausgestaltung des Oberteils 10 gemäß der dritten Ausführungsform ist identisch mit der Ausgestaltung des Oberteils 10 gemäß der zweiten Ausführungsform.

Durch die Materialausnehmungen 16 wird die effektive Querschnittsfläche der Entlüftungskanäle 18 im oberen Bereich des Mundlochstutzens 11 vergrößert, so dass sich eine Entlüftungsströmung in den Entlüftungskanälen 18 einstellt. Ferner weist ein Einfüllstutzen 1 mit dem Oberteil 10 gemäß der dritten Ausführungsform die gleichen positiven Eigenschaften hinsichtlich "spitback" und "splashback" auf wie ein Einfüllstutzen 1 mit einem Oberteil 10 gemäß der zweiten Ausführungsform.

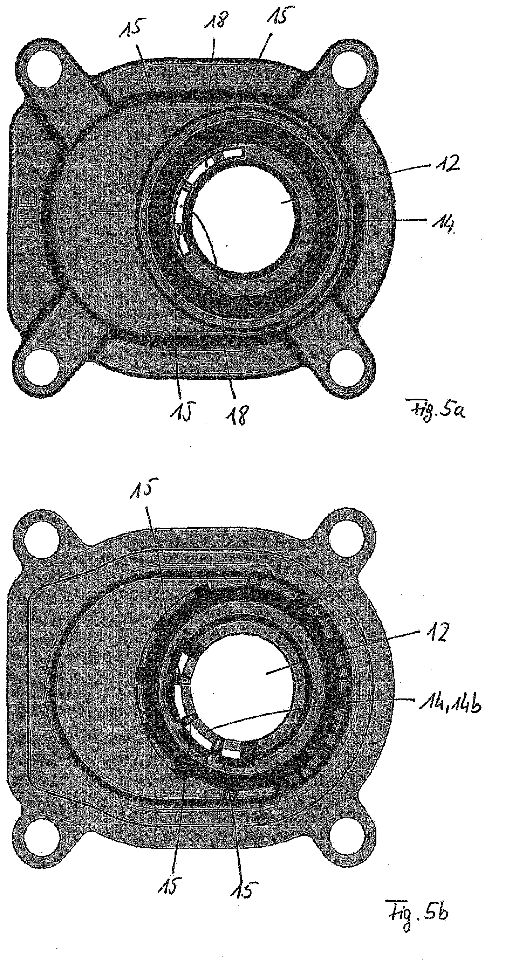

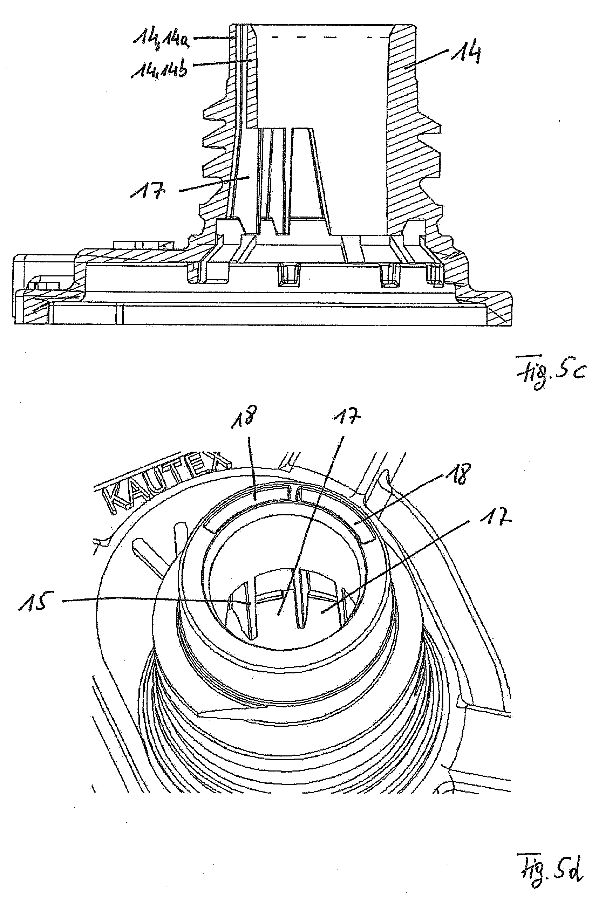

In den Figuren 5a bis 5d ist ein Oberteil 10 eines Einfüllstutzens 1 gemäß einer vierten Ausführungsform der vorliegenden Erfindung dargestellt. Dabei zeigt Figur 5a das Oberteil 10 in Draufsicht, Figur 5b die Unterseite des Oberteil 10 in Draufsicht, Figur 5c das Oberteil 10 in seitlicher Schnittdarstellung und die Figur 5d das Oberteil 10 in räumlicher Darstellung von schräg oben.

Das Oberteil 10 gemäß der vierten Ausführungsform unterscheidet sich von dem Oberteil 10 gemäß der zweiten Ausführungsform dadurch, dass die Innenwand 14b der die Entlüftungskanäle 18 umschließenden Wandung 14 im Bereich des der Mundlochöffnung 12 abgewandten Endes zumindest eine derartige Materialausnehmung 17 aufweist, dass die Entlüftungskanäle 18 in dem der Mundlochöffnung 12 abgewandten Bereich zum Innenraum des Mundlochstutzens 11 hin geöffnet sind.

Ferner sind die zwei Entlüftungskanäle 18 im Bereich der Materialausnehmungen 17 durch zwei weitere Radialwände 15 voneinander getrennt. Diese in Figur 5a links und rechts von der mittleren Radialwand 15 dargestellten Radialwände 15 sind jedoch in Längserstreckung des Mundlochstutzens 10 nicht durchlaufend, sondern erstrecken sich nur in dem Bereich der Materialausnehmungen 17. Lediglich die mittlere Radialwand 15 ist entlang der gesamten Längserstreckung des Mundlochstutzens 11 durchlaufend und trennt die zwei Entlüftungskanäle 18 voneinander.

Aufgrund der Materialausnehmungen 17 im unteren Bereich des Oberteils 10 weisen die Entlüftungskanäle 18 im unteren Bereich einen vergrößerten Querschnitt auf, sodass ein erhöhter Entlüftungsvolumenstrom ermöglicht wird, was wiederum eine schnellere Betankung des Betriebsflüssigkeitsbehälters 3 ermöglicht. Die übrige Ausgestaltung des Oberteils 10 des Einfüllstutzens 1 gemäß der vierten Ausführung ist identisch mit dem Oberteil 10 des Einfüllstutzens 1 gemäß der zweiten Ausführungsform der vorliegenden Erfindung.

Bei sämtlichen Oberteilen 10 ist auf dem Mundlochstutzen 11 ein Gewindekragen 13 vorgesehen, auf den ein nicht dargestellter Behälter zum Befüllen des Betriebsflüssigkeitsbehälters 3 geschraubt werden kann.

Aus Figur 6a ist ein Querschnitt durch einen aus dem Stand der Technik bekannter Einfüllstutzen dargestellt. Es ist ersichtlich, der Entlüftungspfad durch den Mundlochstutzen nicht von dem Befüllkanal getrennt ist. Ferner ist ersichtlich, dass die Entlüftungsströmung durch den Ringraum des Ringmagneten 30 geführt ist.

Aus Figur 6b ist ein Einfüllstutzen 1 gemäß der vorliegenden Erfindung ersichtlich, bei dem ein Ausgleichsvolumen 31 vergrößert ausgestaltet ist. Der Ringmagnet 30 ist ferner mittels der Innenwand 14b und der Wandung 14 derart gehalten, dass der Entlüftungspfad an der Außenseite des Ringmagneten 30 entlang geführt ist, wodurch sich die Entlüftungskapazität nochmals erhöht. Dadurch kann der Betriebsflüssigkeitsbehälter 3 nochmals schneller betankt werden, da pro Zeiteinheit mehr Gas aus dem Betriebsflüssigkeitsbehälter 3 abgeleitet werden kann.

### Bezugszeichenliste

- 1: Einfüllstutzen
- 2: Einfüllrohr
- 3: Betriebsflüssigkeitsbehälter
- 4: Anschluss für Betankungsentlüftungsleitung
- 5: Betankungsentlüftungsleitung
- 6: Tauchrohr
- 7: Ausgleichsbehälter
- 10: Oberteil des Einfüllstutzens
- 11: Mundlochstutzen
- 12: Mundlochöffnung / Mundloch
- 13: Gewindekragen
- 14: Wandung (des Mundlochstutzens)
- 14a: Außenwand (der Wandung)
- 14b: Innenwand (der Wandung)
- 15: Radialwand (zwischen Außenwand und Innenwand)
- 16: Materialausnehmung
- 17: Materialausnehmung
- 18: Entlüftungskanal
- 19: Befestigungsöffnung
- 20: Unterteil des Einfüllstutzens
- 30: Ringmagnet
- 31: Ausgleichsvolumen

## Patentansprüche

1. Einfüllstutzen (1) für einen Betriebsflüssigkeitsbehälter (3) für ein Kraftfahrzeug, wobei der Einfüllstutzen (1) folgende Merkmale aufweist:
- der Einfüllstutzen (1) umfasst einen Mundlochstutzen (11), in den ein Zapfventil zum Befüllen des Betriebsflüssigkeitsbehälters (3) einführbar ist;
- in dem Einfüllstutzen (1) ist ein Entlüftungspfad vorgesehen, der bei der Betankung eine Entlüftungsströmung parallel und entgegengesetzt zum Betankungsvolumenstrom durch den Mundlochstutzen (11) zulässt,
**dadurch gekennzeichnet, dass** der Entlüftungspfad zumindest zwei in einer Wandung (14) des Mundlochstutzens (11) vorgesehene Entlüftungskanäle (18) umfasst, die entlang deren Längserstreckung zumindest teilweise von einer Außenwand (14a) und einer Innenwand (14b) der Wandung (14) umschlossen und jeweils durch eine mit der Innenwand (14b) und der Außenwand (14a) verbundenen Radialwand (15) voneinander getrennt sind, wobei die Innenwand (14b) der die Entlüftungskanäle (18) umschließenden Wandung (14) im Bereich der Mundlochöffnung (12) zumindest eine derartige Materialausnehmung (16) aufweist, dass die Entlüftungskanäle (18) im Bereich der Mundlochöffnung (12) zum Innenraum des Mundlochstutzens (11) geöffnet sind.

2. Einfüllstutzen nach Anspruch 1, **dadurch gekennzeichnet, dass** die Entlüftungskanäle (18) konisch ausgebildet sind und sich von dem dem Betriebsflüssigkeitsbehälter (3) zugewandtem Ende hin zu dessen Mundlochöffnung (12) verjüngen.

3. Einfüllstutzen (1) nach einem der vorhergehenden Ansprüche, **dadurch gekennzeichnet, dass** die Innenwand (14b) der die Entlüftungskanäle (18) umschließenden Wandung (14) im Bereich des der Mundlochöffnung (12) abgewandtem Endes zumindest eine derartige Materialausnehmung (17) aufweist, dass die Entlüftungskanäle (18) im der Mundlochöffnung (12) abgewandtem Bereich zum Innenraum des Mundlochstutzens (11) geöffnet sind.

4. Einfüllstutzen (1) nach einem der vorhergehenden Ansprüche, **dadurch gekennzeichnet, dass** in dem Einfüllstutzen (1) ein Ringmagnet (30) vorgesehen ist, der hinsichtlich der Entlüftungsströmung stromaufwärts vom Mundlochstutzen (11) angeordnet ist.

5. Einfüllstutzen (1) nach Anspruch 4, **dadurch gekennzeichnet, dass** der Entlüftungspfad an der Außenseite des Ringmagneten (30) entlang führt.

6. Einfüllstutzen (1) nach einem der vorhergehenden Ansprüche, **dadurch gekennzeichnet, dass** die Entlüftungskanäle (18) in Draufsicht auf den Mundlochstutzen (11) in dessen Wandung (14) nicht komplett umlaufend angeordnet sind.

7. Einfüllstutzen (1) nach Anspruch 6, **dadurch gekennzeichnet, dass** in Draufsicht auf den Mundlochstutzen (11) die Entlüftungskanäle (18) sich um weniger als 300° um den Umfang des Mundlochstutzens (11) erstrecken.

8. Einfüllstutzen (1) nach einem der vorhergehenden Ansprüche, **dadurch gekennzeichnet, dass** die Entlüftungskanäle (18) in Summe eine Querschnittsfläche zwischen 10 mm² und 100 mm² aufweisen.

## Claims

1. Filler neck (1) for an operating liquid tank (3) for a motor vehicle, wherein the filler neck (1) has the following features:
- the filler neck (1) comprises a mouth hole neck (11) in which a dispensing valve member can be introduced in order to fill the operating liquid tank (3);
- there is provided in the filler neck (1) a ventilation path which during the filling operation permits a ventilation flow parallel with and counter to the filling volume flow through the mouth hole neck (11),
**characterized in that** the ventilation path comprises at least two ventilation channels (18) which are provided in a wall (14) of the mouth hole neck (11) and which are surrounded over the longitudinal extent thereof at least partially by an outer wall (14a) and an inner wall (14b) of the wall (14) and which are separated from each other by means of a radial wall (15) which is connected to the inner wall (14b) and the outer wall (14a), wherein the inner wall (14b) of the wall (14) which surrounds the ventilation channels (18) has in the region of the mouth hole opening (12) at least one material recess (16) which is such that the ventilation channels (18) in the region of the mouth hole opening (12) are open in the direction toward the inner space of the mouth hole neck (11).

2. Filler neck according to claim 1, **characterized in that** the ventilation channels (18) are constructed in a conical manner and taper from the end facing the operating liquid tank (3) to the mouth hole opening (12) thereof.

3. Filler neck (1) according to one of the preceding claims, **characterized in that** the inner wall (14b) of the wall (14) which surrounds the ventilation channels (18) has in the region of the end facing away from the mouth hole opening (12) at least one material recess (17) which is such that the ventilation channels (18) in the region facing away from the mouth hole opening (12) are open in the direction toward the inner space of the mouth hole neck (11).

4. Filler neck (1) according to one of the preceding claims, **characterized in that** there is provided in the filler neck (1) an annular magnet (30) which is arranged upstream of the mouth hole neck (11) with respect to the ventilation flow.

5. Filler neck (1) according to Claim 4, **characterized in that** the ventilation path preferably leads along the outer side of the annular magnet (30).

6. Filler neck (1) according to one of the preceding claims, **characterized in that** the ventilation channels (18) are in a plan view of the mouth hole neck (11) arranged so as not to extend completely in the wall (14) thereof.

7. Filler neck (1) according to Claim 6, **characterized in that** in a plan view of the mouth hole neck (11) the ventilation channels (18) extend through less than 300° round the periphery of the mouth hole neck (11).

8. Filler neck (1) according to one of the preceding claims, **characterized in that** the ventilation channels (18) have in total a cross-sectional surface area of between 10 mm² and 100 mm².

## Revendications

1. Tubulure de remplissage (1) pour un réservoir de fluide de fonctionnement (3) pour un véhicule automobile, la tubulure de remplissage (1) présentant les caractéristiques suivantes :
- la tubulure de remplissage (1) comprend une tubulure d'embouchure (11) dans laquelle un pistolet de distribution peut être introduit pour le remplissage du réservoir de fluide de fonctionnement (3) ;
- un chemin de ventilation est prévu dans la tubulure de remplissage (1), lequel, lors du ravitaillement, permet le passage d'un écoulement de ventilation, parallèlement et à l'encontre du flux volumique de ravitaillement, à travers la tubulure d'embouchure (11),
**caractérisée en ce que** le chemin de ventilation comprend au moins deux canaux de ventilation (18) prévus dans une cloison (14) de la tubulure d'embouchure (11), lesquels canaux sont entourés au moins partiellement par une paroi extérieure (14a) et une paroi intérieure (14b) de la cloison (14) le long de leur extension longitudinale, et sont séparés l'un de l'autre respectivement par une paroi radiale (15) reliée à la paroi intérieure (14b) et à la paroi extérieure (14a), la paroi intérieure (14b) de la cloison (14) entourant les canaux de ventilation (18) présentant, dans la zone de l'ouverture d'embouchure (12), au moins un évidement de matière (16) tel que les canaux de ventilation (18), dans la zone de l'ouverture d'embouchure (12), sont ouverts vers l'espace intérieur de la tubulure d'embouchure (11).

2. Tubulure de remplissage selon la revendication 1, **caractérisée en ce que** les canaux de ventilation (18) sont coniques et se rétrécissent de l'extrémité orientée vers le réservoir de fluide de fonctionnement (3) vers l'ouverture d'embouchure (12) de celui-ci.

3. Tubulure de remplissage (1) selon l'une quelconque des revendications précédentes, **caractérisée en ce que** la paroi intérieure (14b) de la cloison (14) entourant les canaux de ventilation (18) présente, dans la zone de l'extrémité opposée à l'ouverture d'embouchure (12), au moins un évidement de matière (17) tel que les canaux de ventilation (18), dans la zone opposée à l'ouverture d'embouchure (12), sont ouverts vers l'espace intérieur de la tubulure d'embouchure (11).

4. Tubulure de remplissage (1) selon l'une quelconque des revendications précédentes, **caractérisée en ce qu'**un aimant annulaire (30) disposé en amont de la tubulure d'embouchure (11) en ce qui concerne l'écoulement de ventilation est prévu dans la tubulure de remplissage (1).

5. Tubulure de remplissage (1) selon la revendication 4, **caractérisée en ce que** le chemin de ventilation longe la face extérieure de l'aimant annulaire (30).

6. Tubulure de remplissage (1) selon l'une quelconque des revendications précédentes, **caractérisée en ce que** les canaux de ventilation (18) sont disposés de manière à ne pas complètement faire le tour, en vue de dessus sur la tubulure d'embouchure (11), dans la cloison (14) de celle-ci.

7. Tubulure de remplissage (1) selon la revendication 6, **caractérisée en ce que** les canaux de ventilation (18) s'étendent, en vue de dessus sur la tubulure d'embouchure (11), sur moins de 300° autour de la circonférence de la tubulure d'embouchure (11).

8. Tubulure de remplissage (1) selon l'une quelconque des revendications précédentes, **caractérisée en ce que** les canaux de ventilation (18) présentent au total une surface de section transversale comprise entre 10 mm² et 100 mm².
